(19) Europäisches Patentamt / European Patent Office / Office européen des brevets

(11) **EP 3 696 834 B1**

(12) **FASCICULE DE BREVET EUROPEEN**

(45) Date de publication et mention de la délivrance du brevet:
**03.04.2024 Bulletin 2024/14**

(21) Numéro de dépôt: **20157469.6**

(22) Date de dépôt: **14.02.2020**

(51) Classification Internationale des Brevets (IPC):
**H01G 4/20** (2006.01)

(52) Classification Coopérative des Brevets (CPC):
**H01G 4/206**

(54) **CAPACITE METAL-POLYMERE COMPRENANT UN FILM DIELECTRIQUE A FORTE CONSTANTE DIELECTRIQUE ET A FORT CHAMP DE CLAQUAGE**

METALL-POLYMER-KAPAZITÄT, DIE EINE DIELEKTRISCHE FOLIE MIT EINER STARKEN DIELEKTRISCHEN KONSTANTE UND EINER STARKEN DURCHBRUCHFELDSTÄRKE UMFASST

METAL-POLYMER CAPACITY COMPRISING A DIELECTRIC FILM WITH HIGH DIELECTRIC CONSTANT AND WITH HIGH BREAKDOWN FIELD

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **18.02.2019 FR 1901600**

(43) Date de publication de la demande:
**19.08.2020 Bulletin 2020/34**

(73) Titulaire: **COMMISSARIAT À L'ÉNERGIE ATOMIQUE ET AUX ÉNERGIES ALTERNATIVES**
**75015 Paris (FR)**

(72) Inventeur: **VIALA, Bernard**
**38054 CEDEX 09 (FR)**

(74) Mandataire: **Brevalex**
**Tour Trinity**
**1 B Place de la Défense**
**92400 Courbevoie (FR)**

(56) Documents cités:
EP-A1- 3 252 782     US-A1- 2010 123 996

• SHEN Y ET AL: "INTERFACIAL EFFECT ON DIELECTRIC PROPERTIES OF POLYMER NANOCOMPOSITES FILLED WITH CORE/SHELL-STRUCTURED PARTICLES", ADVANCED FUNCTIONAL MATERIALS, WILEY - V C H VERLAG GMBH & CO. KGAA, DE, vol. 17, no. 14, 24 septembre 2007 (2007-09-24), pages 2405-2410, XP001506356, ISSN: 1616-301X, DOI: 10.1002/ADFM.200700200
• Jose Enrico Quijano Quinsaat: "Chapter 5: Surface Hydrophobization of Silver Nanoparticles (AgNPs) through Surface-initiated Atom Transfer Radical Polymerization (SI-ATRP)" In: "Synthesis and Functionalization of Silver Nanoparticles for the Preparation of High Permittivity Nanocomposittes", 18 août 2015 (2015-08-18), École Polythecnique Fédérale de Lausanne, XP055650170, pages 185-208, * 5.2.2 Synthesis of AgNPs *

## Description

## DOMAINE TECHNIQUE

La présente invention se rapporte au domaine des capacités, et plus particulièrement des capacités métal-polymère, notamment pour des applications dites haute tension.

L'invention concerne également un procédé de fabrication d'une telle capacité métal-polymère.

## ÉTAT DE LA TECHNIQUE ANTÉRIEURE

Les capacités de type film « Métal /Isolant/ Métal » (MIM) sont des structures dans laquelle un matériau diélectrique est enroulé entre deux électrodes métalliques. Le matériau diélectrique doit être flexible et est, généralement, de type organique (papiers imbibés, huiles et polymères).

La demande en capacités haute tension pour la conversion d'énergie ne cesse de grandir avec le développement des véhicules électriques. Les modules de conversion de puissance à haut rendement exigent aujourd'hui que les capacités répondent à de nombreux critères, en particulier les capacités doivent :

- être connectées au plus près des circuits, c'est à dire avec des longueurs de connexions les plus faibles possibles afin de limiter l'inductance et la résistance parasites,
- être extrêmement fines (< 1 mm) pour pouvoir être intégrées aux modules, par exemple, disposées à l'aplomb des circuits,
- posséder une tension de claquage élevée ($\geq$ 200 MV/m),
- posséder une grande permittivité ($\geq$ 50),
- avoir de faibles pertes électriques (< $10^{-2}$),
- présenter une bonne stabilité en température (au moins jusqu'à 100°C).

De nos jours, il est possible de fabriquer des films polymères très fins (jusqu'à 60 $\mu$m) possédant des tensions de claquage élevées (jusqu'à 650 MV/m). Les films sont, par exemple, en polystyrène (PS), en Polyéthylène téréphtalate (PET), en polytétrafluoroéthylene (PTFE), ou encore en polyétherimide (PEI).

Cependant, de tels films présentent une faible constante diélectrique intrinsèque (au plus jusqu'à 3,2). La faible permittivité de ces diélectriques est le verrou de la miniaturisation des capacités haute tension puisque cela signifie que la densité surfacique des capacités est en conséquence intrinsèquement limitée.

Les ter-polymères poly((fluorure de vinylidène - trifluoroéthylène - chlorofluoroéthylène) (P(VDF- TrFE-CFE) et poly((fluorure de vinylidène - trifluoroéthylène - chlorotrifluoro éthylène) (P(VDF-TrFE-CTFE) sont des exceptions parmi les polymères diélectriques.

L'ajout de plastifiants (CFE ou CTFE) non polaires au PVDF induit un désordre dans l'arrangement des chaines polaires du copolymère. Le polymère acquiert ainsi un caractère relaxeur (dépourvus de cycles d'hystérésis). De plus, l'ajout du plastifiant abaisse la température de Curie du copolymère, ce qui conduit à une permittivité très élevée pour un polymère (pouvant atteindre 60). Le ter-polymère est donc en théorie capable de stocker 5 fois plus d'énergie à l'ambiante que son homologue co-polymère ferroélectrique dont la permittivité atteint 12. Le champ de claquage de ce ter-polymère est de l'ordre de 400MV/m (Chu et al. « A dielectric polymer with high electric energy density and fast discharge speed», Science, 313(5785), 334-336). Ces polymères diélectriques polaires relaxeurs suscitent beaucoup d'intérêt pour les capacités de puissance. Il existe aujourd'hui des encres ou des solutions de ce polymère qui peuvent être déposées en couches minces (1 à 10 $\mu$m) par sérigraphie ou dépôt à la tournette (« spincoating ») sur des substrats fins (PEN, silicium, verre).

Cependant, la faible température de Curie entraine une variation importante des propriétés diélectriques avec la température, qui peut être pénalisante pour les applications de puissance qui émettent beaucoup de chaleur. Mais surtout, la transformation du caractère piézoélectrique du copolymère (proportionnel à V) en caractère électrostrictif avec le terpolymère (proportionnel à $V^2$) pose problème parce qu'elle provoque à haute tension une compression mécanique plus importante du polymère. En s'écrasant entre les électrodes, la capacité subit alors une augmentation catastrophique du champ électrique interne (effet d'avalanche) qui entraine sa destruction. Il est donc difficile d'utiliser ce polymère à haute tension.

Une partie de la communauté scientifique s'est donc tournée vers les matériaux nanocomposites pour augmenter la permittivité des polymères par ajout de soit de nanoparticules d'oxyde soit de nanoparticules métalliques.

La première voie consiste à ajouter des nanoparticules d'oxydes dans un polymère. Plus particulièrement, le polymère est mélangé avec une forte concentration de nanoparticules d'oxydes complexes à forte permittivité ($TiO_2$, $SrTiO_3$, $BaTiO_3$, PZT, PMNPT,...). Les mélanges sont préparés en milieu homogène par des techniques simples, avec agitation. L'augmentation de la permittivité ne devient substantielle que pour des taux de charge élevés conformément à la loi des mélanges (Maxwell Garnet), par exemple pour des taux de charge supérieur à 30 % ou 50 % en masse. Cependant, avec de telles concentrations massiques, le matériau nanocomposite ainsi formé est sujet à de fortes inhomogénéités du champ électrique local à l'interface entre les nanoparticules à forte permittivité et le polymère à faible permittivité. Or, ces contrastes de permittivité conduisent à une augmentation du champ électrique du côté de la plus faible permittivité, c'est à dire ici du côté du polymère. Ce dernier est donc soumis à un champ électrique plus grand. Il sera donc amené à claquer prématurément dans les zones où le polymère sera plus fin. De tels nanocomposites fortement chargés en nanoparticules à forte permittivité ne sont donc pas adaptés à la haute tension. De plus, la quantité de polymère présente entre les nanoparticules est variable et mal contrôlée.

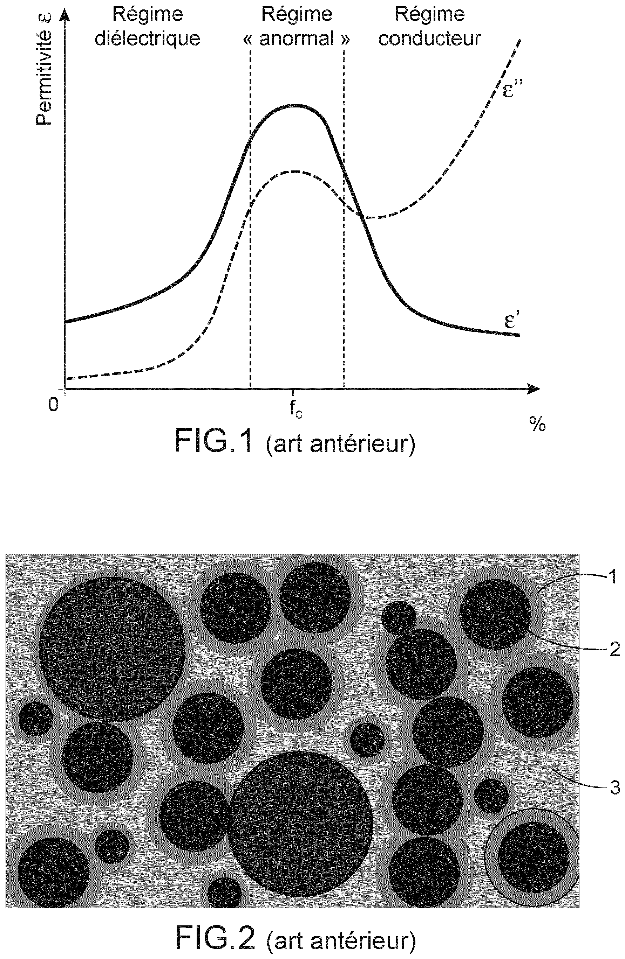

La seconde voie consiste à mélanger le polymère avec de faibles concentrations de nanoparticules électriquement conductrices, par exemple des nanoparticules métalliques. On parle alors de composite métal-polymère ou de composite conducteur-diélectrique. Dans un tel milieu, la concentration de la phase métallique ou conductrice doit rester sous le seuil de percolation électrique qui en général est faible (en général inférieur à 1% en volume), et être maîtrisée avec une grande précision. On crée alors les conditions à la formation d'une permittivité géante à l'interface métal-diélectrique selon la théorie de Bruggeman représentée sur la figure 1 et par l'équation suivante :

$$\varepsilon = \epsilon_{pol} \times \frac{1}{(f_c - f)}$$

Il est alors possible, pour de faible taux de charge, d'augmenter significativement la permittivité du matériau composite (de plus d'un ordre de grandeur) par rapport à la permittivité du polymère hôte.

Cependant, ces matériaux composites sont obtenus en mélangeant les différents constituants en milieu homogène par des techniques simples avec agitation. Or, la dispersion des nanoparticules métalliques est en général mal maitrisée dans un polymère.

Une amélioration notable a été proposée dans l'article de Shen et al. (« High dielectric performance of polymer composite films induced by a percolating interparticle barrier loyer », Advanced Materials 2007, 19(10), 1418-1422). Voir aussi "Interfacial Effect on Dielectric Properties of Polymer Nanocomposytes filled with Core / Shell-Structured Particles", Shen et al., Advanced Functional Materials, vol. 17, no. 14, pages 2405-2410. Il a été démontré que le greffage d'une fine couche de polymère 1 (PVP) autour de nanoparticules 2 d'argent avant de les mélanger avec un polymère hôte 3, de type époxy, conduisait à une meilleure dispersion des nanoparticules car la coquille polymère joue le rôle d'espaceur. Le diamètre du coeur en argent va de 20 à 120nm et l'épaisseur de la coquille est de 4-6nm pour les coquilles les plus fines et de 8-10nm pour les coquilles les plus épaisses. La permittivité de ce matériau composite atteint environ 300 au seuil de percolation (0,2 % vol.). Un tel film diélectrique est représenté schématiquement sur la figure 2. Cependant, la tenue en tension de ce matériau composite chute de 10 MV/m à 1 MV/m avant le seuil de percolation.

La tenue au claquage peut être améliorée par l'ajout de nanofeuillets de nitrure de bore hexagonal. Ainsi, dans l'article de Wu et al. (« Graphene/Boron Nitride-Polyurethane Microlaminates for Exceptional Dielectric Properties and High Energy Densities ». ACS applied materials & interfaces 2018, 10(31), 26641-26652), la tenue au claquage d'un aérogel de graphène oxydé réduit rGO (phase conductrice) mélangé avec du polyuréthane (phase diélectrique) est améliorée en intercalant entre les couches de l'aérogel des couches de nanofeuillets de nitrure de bore hexagonal enrobés dans du polyuréthane. La mise en forme d'un tel composite micro-laminé utilise le coulage à froid (freeze casting) et le compactage (pressing), ce qui n'est pas compatible avec de nombreux substrats, et notamment avec les technologies silicium, et ne permet pas de réaliser une capacité intégrée.

## EXPOSÉ DE L'INVENTION

Un but de la présente invention est de proposer une capacité présentant une forte permittivité, peu de pertes par conduction et une bonne tenue à la tension électrique.

Pour cela, la présente invention propose une capacité métal-polymère comprenant un film diélectrique disposée entre deux électrodes, le film diélectrique comprenant :

- des nanoparticules à structure coeur-coquille, le coeur des nanoparticules étant métallique et la coquille comprenant une première couche en un matériau carboné inorganique et une deuxième couche en un premier matériau polymère, le rapport entre le diamètre maximal des nanoparticules et le diamètre minimal des nanoparticules étant inférieur ou égal à 5, de préférence inférieur ou égal à 3,
- des nanoparticules électriquement isolantes, une matrice, minérale ou en un deuxième matériau polymère, dans laquelle sont dispersées les nanoparticules.

Les nanoparticules représentent de 0,01% à 10%, de préférence de 0,01% à 5% et encore plus préférentiellement de 0,1% à 2% en volume du film diélectrique. Les nanoparticules à structure coeur/coquille représentent une fraction volumique du film diélectrique inférieure au seuil de percolation électrique du film diélectrique.

L'invention se distingue fondamentalement de l'art antérieur, notamment, par la présence de nanoparticules hybrides métal/polymère monodispersées.

La faible distribution de tailles des nanoparticules, enrobées par le premier matériau polymère, permet de limiter voire de supprimer la conduction interparticulaire : à la fois les chemins de conduction directs à basse tension (effet ohmique local du à l'absence de polymère localement) et indirects à haute tension (effet de champ (FET) ou effet tunnel à travers des barrières très fines de polymère), ce qui augmente la permittivité, conduit à une diminution des pertes par conduction et évite d'avoir des champs de claquage incontrôlés.

Dans le film diélectrique, on observe l'absence d'agrégats et de très grandes nanoparticules (par exemple ayant une taille ou plus grande dimension jusqu'à 100 fois, 30 fois ou 10 fois plus grande que la taille moyenne des nanoparticules) et l'absence de très petites particules (ayant une taille, par exemple, jusqu'à 6 fois ou 10 fois plus petite que la taille moyenne des nanoparticules).

Avantageusement, les nanoparticules sont dispersées de manière homogène dans la matrice polymérique. Par dispersées de manière homogène, on entend que les nanoparticules sont réparties de manière sensiblement uniforme dans la matrice polymérique. Ceci permet de réduire d'autant plus la conduction interparticulaire.

Cette dispersion homogène est rendue possible par la présence de la deuxième couche en un matériau polymère dans la coquille qui enrobe les nanoparticules. La deuxième couche polymère recouvre au moins partiellement et, de préférence, totalement le coeur des nanoparticules. En plus, de limiter la probabilité de conduction interparticulaire, elle peut jouer le rôle d'espaceur, en fonction de la quantité de nanoparticules dans le film diélectrique. L'épaisseur peut, par exemple, aller de 5 à 15nm. Elle présente, avantageusement, une épaisseur uniforme autour de la nanoparticule. Avantageusement, l'épaisseur de la couche en deuxième matériau est sensiblement identique d'une nanoparticule à l'autre. Par sensiblement identique, on considère que l'épaisseur ne varie pas de plus de 20% d'une nanoparticule à l'autre et au sein d'une même nanoparticule.

La présence de la couche en matériau carboné inorganique permet de greffer, de manière covalente, la couche en matériau polymère autour des nanoparticules. Le coeur des nanoparticules est protégé de l'oxydation par la coquille, ce qui leur permet de conserver leurs propriétés initiales (par exemple magnétiques et/ou électriques). De plus, la stabilité mécanique des nanoparticules au cours du temps est améliorée.

Avantageusement, le matériau carboné inorganique est du carbone 2D organisé. De préférence, le matériau carboné est du graphène. La couche carbonée est constituée d'une répétition de quelques couches à quelques dizaines de couches de graphène pour conserver une structure organisée 2D du carbone. Par exemple elle comprend quelques couches de graphène (de 2 à 5 par exemple). On choisira, avantageusement, une couche carbonée comprenant au moins deux couches de graphène pour conférer des propriétés hydrophiles suffisantes à la nanoparticule et pour pouvoir former des liaisons de Van der Waals. On choisira, avantageusement, un nombre de couches inférieur à 100, pour éviter l'apparition de défauts dans les couches et d'avoir un arrangement de carbone 2D désorganisé en surface, par exemple hydrogéné, ou de type graphitique qui sont hydrophobes.

La couche carbonée forme, avantageusement, une couche continue autour de chaque nanoparticule.

Avantageusement, le coeur des nanoparticules est en cobalt, en fer, en nickel, en cuivre, en or et/ou en argent.

Avantageusement, le premier matériau polymère est choisi parmi le polystyrène, le polyméthacrylate de méthyle, le polyuréthane, un polyacrylique, le polypropylène, un polyimide, le polyétherimide et un polymère ayant un groupe pyrène.

Selon l'invention, le film diélectrique comprend des nanoparticules électriquement isolantes. En effet, en présence d'un champ électrique élevé, un courant de faible intensité peut s'établir entre les nanoparticules par effet tunnel (FET). A basse tension, cela ne pose pas de problème. Cependant, en augmentant la tension au-delà d'un certain seuil, ces courants augmentent subitement et la densité de courant dans le polymère hôte devient problématique. A haute tension, l'émission d'électrons par effet de champ à l'interface métal/polymère peut entraîner une augmentation des pertes électriques et/ou un échauffement qui peut ramollir voire faire fondre le polymère d'enrobage et/ou le polymère hôte entrainant la destruction du matériau composite et de la capacité. L'insertion de nanoparticules électriquement isolantes permet de limiter voire de supprimer ces phénomènes électriques indésirables. La capacité obtenue présente une forte constante diélectrique et un fort champ de claquage.

De plus, il est possible, même pour des applications à haute tension, de choisir des polymères dont la température de fusion ou de transition vitreuse est relativement faible (inférieure ou égale à 150°C par exemple), ce qui permet d'utiliser un large choix de polymères.

Avantageusement, les nanoparticules électriquement isolantes sont en oxyde métallique, par exemple en oxyde de baryum et/ou de strontium.

Encore plus avantageusement, les nanoparticules électriquement isolantes sont en un matériau semiconducteur, de préférence à grand gap, comme le carbure de silicium, le diamant et/ou le nitrure de bore hexagonal. Dans le cas du nitrure de bore hexagonal, il peut s'agir également de nanotubes et/ou de nanofeuillets.

Selon une première variante de réalisation, les nanoparticules électriquement isolantes sont dans la coquille des nanoparticules.

Selon une deuxième variante de réalisation, pouvant être combinée avec la première variante de réalisation, les nanoparticules électriquement isolantes sont dans la matrice polymérique.

Le film diélectrique peut comprendre une alternance de nanoparticules à structure coeur/coquille et de nanoparticules électriquement isolantes.

Les nanoparticules à structure coeur/coquille et les nanoparticules électriquement isolantes peuvent être dispersées de manière aléatoire dans la matrice.

Avantageusement, le deuxième matériau polymère est choisi parmi le polystyrène, le polyéthylène téréphtalate, l'acétate de cellulose, le polycarbonate, le polypropylène, le polyéthylène, un polyamide, un polysiloxane, un polysulfone, un polyester éventuellement aromatique, un polyétheréthercétone, un polyétherimide et un époxyde.

Avantageusement, le deuxième matériau polymère comprend des groupements photosensibles aux rayons ultra-violets.

Avantageusement, le rapport entre le diamètre maximal des nanoparticules et le diamètre minimal des nanoparticules est inférieur à 1,5, de préférence inférieur à 1,3, encore plus préférentiellement inférieur à 1,2 et encore plus préférentiellement inférieur à 1,1. Une telle distribution de taille très resserrée assure une forte augmentation de la permittivité.

L'invention concerne également un procédé pour fabriquer une capacité métal-polymère telle que décrite précédemment, comprenant les étapes suivantes :

    i. Fourniture d'une solution contenant :

- un solvant,
- les nanoparticules à structure coeur/coquille, le coeur des nanoparticules étant métallique et la coquille comprenant une première couche en un matériau carboné et une deuxième couche en un premier matériau polymère,
- le deuxième matériau polymère dissous ou les précurseurs du deuxième matériau polymère,
- les nanoparticules électriquement isolantes,

    ii. éventuellement, polymérisation des précurseurs du deuxième matériau polymère,
    iii. dépôt de la solution sur une électrode.

On choisira, avantageusement, une température de dépôt inférieure à la température de fusion du premier matériau polymère.

Avantageusement, les nanoparticules à structure coeur/coquille fournies à l'étape i) sont obtenues selon les étapes suivantes :

    a) Préparation d'une mini-émulsion eau-dans-huile comprenant des gouttelettes d'une phase aqueuse, dispersées dans une phase organique,
    b) Ajout de nanoparticules comprenant un coeur métallique recouvert par une coquille de matériau carboné, moyennant quoi on obtient des nanoparticules piégées dans les gouttelettes,
    c) Ajout de monomères précurseurs du premier matériau polymère, et
    d) Ajout d'un initiateur de polymérisation,

l'ajout des monomères et de l'initiateur de polymérisation conduisant à la polymérisation des monomères, moyennant quoi on obtient des nanoparticules, enrobées par une couche du premier matériau polymère, dispersées dans la phase organique.

Par émulsion, on entend un mélange hétérogène de deux liquides non miscibles, comme l'huile et l'eau.

Une des deux phases (dite phase dispersée, ici la phase aqueuse) est dispersée sous forme de gouttelettes dans l'autre (dite phase dispersante). La taille des gouttelettes peut aller de quelques dizaines de nanomètres à 1 micron, par exemple de 20nm à 1μm. Par mini-émulsion, on entend que taille des gouttelettes peut aller de 30 nm à 100 nm, et plus préférentiellement de 30 nm à 60 nm.

Les gouttelettes de la mini-émulsion forment des réacteurs de polymérisation. Lors de la réaction de polymérisation, les monomères vont être progressivement consommés jusqu'à saturation de la micelle. On parle de croissance micellaire. La taille de la particule finale ainsi formée est semblable à celle de la micelle. On obtient au final un produit appelé latex comprenant des billes monodispersées de polymère (micelles sans nanoparticule métallique) et de nanoparticules hybrides métal-polymère (micelles avec nanoparticules métalliques).

Cette polymérisation en milieu hétérogène conduit à un meilleur contrôle de l'épaisseur de polymère enrobant le coeur des nanoparticules, par rapport à une polymérisation en milieu homogène.

La présence de la couche de matériau carboné entourant les nanoparticules permet de rendre les nanoparticules hydrophiles, ce qui permet leur insertion dans les gouttelettes de l'émulsion. La couche de matériau carboné les protège également efficacement contre l'oxydation. Sans cette coquille carbonée, les nanoparticules métalliques s'oxyderaient spontanément au contact de l'eau et/ou forment des hydroxydes, ce qui les rendrait hydrophobes et contribuerait à les chasser des micelles pour rejoindre la phase dispersante (huile).

Les gouttelettes jouent en plus d'un rôle de réacteur de polymérisation, un rôle de filtre.

Seules les nanoparticules dont le diamètre est inférieur au diamètre des gouttelettes seront piégées dans les gouttelettes et enrobées par une couche de polymère au cours du procédé.

Les nanoparticules dont le diamètre est supérieur ou égal à celles des gouttelettes formeront un sédiment brut (sans polymère) qui sera facilement éliminé par la suite. Par ailleurs, il a été observé que les nanoparticules les plus petites (par exemple d'un diamètre de moins de 10 nm) sont imparfaitement recouvertes par la couche carbonée et s'oxydent rapidement (formation de carboxyles et/ou d'oxydes métalliques), ce qui leur confère un caractère plus hydrophobe que les nanoparticules complètement recouvertes par une couche carbonée. Ces particules ne pénètrent pas dans les gouttelettes contenant la phase aqueuse, restent en suspension dans la phase dispersante et pourront facilement être éliminée ultérieurement.

On obtient ainsi des nanoparticules à très faible distribution de taille. Avantageusement, le rapport entre le diamètre maximal des nanoparticules et le diamètre minimal des nanoparticules est inférieur à 1,5, de préférence inférieur à 1,3, encore plus préférentiellement inférieur à 1,2 et encore plus préférentiellement inférieur à 1,1. Une telle distribution de taille très resserrée n'existe pas dans le commerce et est rendue possible par le procédé de miniémulsion.

Selon une première variante, des nanoparticules électriquement isolantes telles que définies précédemment sont ajoutées lors de l'étape i).

Selon variante pouvant être combinée avec la première variante, des nanoparticules électriquement isolantes telles que définies précédemment sont ajoutées lors de l'étape a), b) ou c).

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

La figure 1 précédemment décrite dans l'art antérieur, représente, de manière schématique, l'évolution de la partie réelle $\varepsilon'$ et de la partie imaginaire $\varepsilon''$ de la permittivité $\varepsilon$ en milieu percolatif, selon le modèle de Bruggeman,

La figure 2 précédemment décrite, représente, de manière schématique, un film diélectrique selon l'art antérieur,

Les figures 3, 4 et 5 représentent, de manière schématique, une vue en coupe, de capacités planes selon différents modes particuliers de réalisation de l'invention ; les inserts représentent de manière schématique l'émission par effet de champ des nanoparticules dans le film diélectrique.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

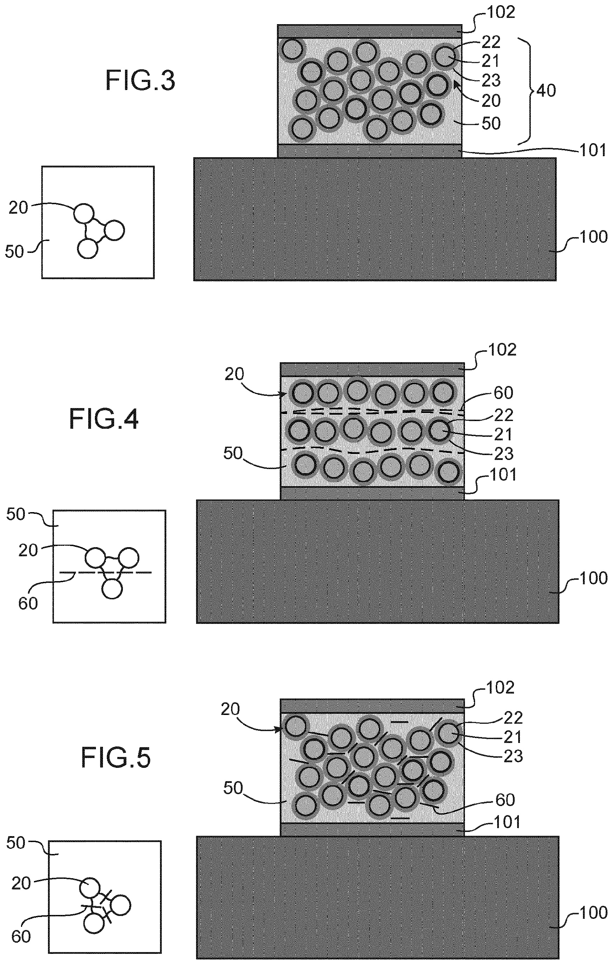

On se réfère aux figures 3 à 5 qui représentent des capacités planes selon différents modes de réalisation de l'invention.

Les figures ne sont pas à l'échelle pour mieux représenter une vue d'ensemble des nanoparticules, notamment dans le cas où le pourcentage volumique de nanoparticules est relativement faible.

La capacité hybride métal/polymère est formée sur un substrat 100. Le substrat 100 est, de préférence, en silicium. D'autres substrats peuvent être utilisés comme le verre, l'alumine, le ferrite et les films polymères comme par exemple le polyimide (tel que le Kapton), le poly(naphtalate d'éthylène), et le poly(téréphtalate d'éthylène) (PET).

La capacité comprend une première électrode 101 dite inférieure, en contact avec le substrat 100 et une deuxième électrode 102 dite supérieure.

Les électrodes sont électriquement conductrices et, de préférence, en métal. Elles sont, par exemple, en or.

Un film diélectrique 40 est disposé entre la première électrode 101 et la deuxième électrode 102. Le film diélectrique comprend une matrice polymérique 50 dans laquelle sont dispersées des nanoparticules 20 hybrides métal-polymère.

Par nanoparticules 20, on entend des éléments de taille submicronique (typiquement inférieure à 1 $\mu$m) de forme, par exemple, sphériques, allongées, ovoïdes. De préférence, il s'agit de particules sphériques. On appelle diamètre ou taille leur plus grande dimension.

Les nanoparticules 20 sont monodispersées, c'est-à-dire qu'elles présentent une faible distribution de taille. Autrement dit, elles ont une distribution de taille comprise entre un diamètre maximal et un diamètre minimal tel que leur rapport soit inférieur ou égal à 5, 3 ou 2 et avantageusement inférieur ou égal à 1,5 par exemple 1,3 ou 1,2 ou 1,1. Les caractéristiques d'une telle poudre (rapport 1,1) sont, par exemple, un diamètre moyen des nanoparticules de 40nm, un diamètre maximal de 42nm et un diamètre minimal de 38nm. Le diamètre des nanoparticules 20 peut être mesuré avec un granulomètre laser ou par diffraction de la lumière (DLS pour « Dynamic Light Scattering ») en solution.

Toutes les caractéristiques dimensionnelles mentionnées précédemment et par la suite peuvent être également mesurées par les techniques suivantes : MEB (microscope électronique à balayage) et TEM (microscope électronique en transmission), ellipsométrie et spectrophotométrie.

De plus, comme les nanoparticules sont solidement enrobées par une fine couche régulière de polymère diélectrique, la distance de séparation entre les nanoparticules est maitrisée. Par exemple, la distance de séparation bord à bord entre deux particules métal/C de diamètre $\phi$ est de 1 x $\phi$, 1/ 2 x $\phi$ ou 2/3 x $\phi$ et avantageusement inférieure ou égale à 1/3 x $\phi$. Par exemple, un tel film est caractérisé par une dispersion homogène de nanoparticules de Co/C de diamètre moyen 30nm avec une distance intergranulaire moyenne de 10nm, jusqu'à 5nm.

Les particules 20 ont une structure coeur-coquille. La coquille 22 est solidaire du coeur 21 de la particule.

Le coeur 21, ou noyau, est un matériau métallique. Par matériau métallique, on entend un métal, un alliage de métal. De préférence, il s'agit d'un métal. De préférence, il s'agit de cobalt, nickel, fer, cuivre, argent ou or.

Le coeur 21 est recouvert par un revêtement 22 ou coquille. Le revêtement 22 comprend :

- une première couche en un matériau carboné,
- une deuxième couche en un premier matériau polymère.

De telles nanoparticules sont notées métal/C/polymère.

Le matériau carboné est, de préférence, inorganique, par exemple en graphène, en graphite ou en nanotubes de carbone.

D'une manière générale, il s'agit d'un revêtement de carbone 2D organisé sur une surface non plane (par exemple sur la surface d'une nanoparticule).

De préférence, le revêtement 22 est en graphène. Il peut comprendre une couche ou plusieurs (deux, trois, quatre,...) couches de graphène. Par exemple, il comprend de 1 à 50 feuillets de graphène, de préférence de 1 à 10, par exemple de 1 à 5, et encore plus préférentiellement de 3 à 10.

De préférence, la coquille 22 carbonée est continue de manière à recouvrir complètement le coeur 21 de la particule 20 pour protéger le coeur des nanoparticules de l'oxydation, et les rendre plus hydrophiles.

Avantageusement, le premier matériau polymère est choisi parmi le polystyrène (PS), le polyméthacrylate de méthyle (PMMA), le polyuréthane (PU), un polyacrylique (PAA), le polyimide (PI), le polyétherimide (PEI) et le polypropylène (PP). Le polymère peut également être un polymère fonctionnalisé par un groupement pi conjugué, tel que le pyrène. Il s'agit, par exemple, de polystyrène fonctionnalisé par un groupement pyrène (Py-PS) ou encore d'un polyacrylique fonctionnalisé par un groupement pyrène (Py-PAA).

L'épaisseur de la couche de polymère 23 va, par exemple de 1nm à 100n, de préférence de 2nm à 50nm et encore plus préférentiellement de 5nm à 15nm.

Avantageusement, la couche de polymère 23 enrobe complètement le coeur 21 de la nanoparticule 20.

Le matériau polymère est lié de manière covalente à la couche carbonée, ce qui réduit les risques de décohésion et d'arrachement. L'uniformité et l'adhésion de la couche d'isolation électrique entourant les nanoparticules sont améliorées. La conduction électrique interparticulaires à basse tension est supprimée.

Comme les nanoparticules 20 sont solidement enrobées par une fine couche 23 régulière de polymère diélectrique, la distance de séparation entre les nanoparticules, dans le film diélectrique, est maitrisée.

Le pourcentage volumique de nanoparticules dans le matériau composite va de 0,01% à 10%. Avantageusement, pour former une capacité, le pourcentage volumique va par exemple de 0,01% à 5 %, et de préférence de 0,1% à 2%.

On choisira, avantageusement, le pourcentage volumique de nanoparticules 20 de manière à se situer sous le seuil de percolation électrique, par exemple, dans une gamme du quart à la moitié du seuil de percolation.

La capacité peut comprendre un ou plusieurs types de nanoparticules 20.

Selon une première variante de réalisation avantageuse, la matrice 50 est en un deuxième matériau polymère.

Le deuxième matériau polymère peut être en polystyrène (PS), polyéthylène téréphtalate (PET), acétate de cellulose (CA), polycarbonate (PC), polytétrafluoroéthylene (PTFE), polyparylène, polypropylène (PP), polyéthylène (PE), par exemple en polyéthylène réticulé (PER), polyphénylène sulphide (PPS), polypropylène biorienté (BOPP), polyimide (PI), polyamide (PA), polysiloxane (ou Silicone), polysulfone, un polyester éventuellement aromatique, par exemple en fluorène de polyester (FPE), le polyétheréthercétone (PEEK), le polyétherimide (PEI) et un époxyde (époxy).

La matrice polymère, par exemple en PI et en époxyde, peut contenir des agents de réticulation photosensibles, de préférence aux UV.

Le premier matériau polymère et le deuxième matériau polymère peuvent être identiques ou différents. Lorsque les deux matériaux polymères sont identiques, ils présentent des poids moléculaires différents. Il est possible de les différencier, par exemple, par spectroscopie infrarouge à transformée de Fourier (ou FTIR pour « Fourier Transform InfraRed spectroscopy »).

Selon une deuxième variante de réalisation avantageuse, la matrice polymérique 50 peut être remplacée par une matrice en silice, en alumine, en nitrure de silicium, en oxynitrure de silicium. Ces matrices peuvent être déposées par dépôt de couches atomiques (ALD), dépôt physique en phase vapeur (PVD) ou dépôt chimique en phase vapeur assisté par plasma (PECVD) à basse température, par exemple à une température inférieure à 350°C.

Le film diélectrique 40 a une épaisseur allant de 0,05 $\mu$m à 50 $\mu$m.

La capacité telle que représentée sur la figure 3 est, avantageusement, destinée à des applications basse ou moyenne tension. Une telle capacité vise, notamment, un champ de claquage de l'ordre de 100 MV/m.

Selon l'invention, pour des applications dites haute tension (500MV/m), le film diélectrique 40 comprend, en outre, des nanoparticules électriquement isolantes 60 (figures 4 et 5). Par électriquement isolant, on entend une résistivité électrique intrinsèque supérieure à $10^{12}$ ohm.cm.

En effet, l'émission d'électrons par effet de champ à l'interface métal/polymère entraine, à fort champ, une augmentation des pertes électriques et un échauffement qui risque de détruire la capacité. La circulation de ces électrons est, avantageusement, bloquée par les nanoparticules électriquement isolantes 60 qui forment des "barrières" isolantes 2D (donc très fines). Les nanoparticules électriquement isolantes 60 sont disposées en travers des chemins des conductions (insert des figures 4 et 5). Les pertes électriques sont réduites.

Il peut s'agir de nanoparticules minérales, par exemple des nanoparticules de silice, des nanoparticules d'oxydes complexes, par exemple de titanate de baryum ($BaTiO_3$) ou/et strontium ($SrTiO_3$), des nanoparticules de diamant ou de carbure de silicium (SiC).

Il peut s'agir de nanoparticules tubulaires ou lamellaires. Par nanoparticules tubulaires ou lamellaires, on entend des particules dont l'une des dimensions est très inférieure aux deux autres. De telles particules tubulaires ou lamellaires comportent le plus souvent une épaisseur e (ou un diamètre d) bien inférieure à leur longueur L ou largeur l. De préférence, le rapport e/L (ou d/L) et e/l (ou d/l) est inférieur ou égal à 0,5 et de préférence inférieur ou égal à 0,1 ou à 0.01.

Avantageusement, les nanoparticules tubulaires ou lamellaires sont en nitrure de bore hexagonal (h-BN). Il peut également s'agir d'oxyde de graphène GO.

Les nanoparticules lamellaires, notamment les nanoparticules de h-BN et GO, peuvent, par exemple, être exfoliées. Par exfolié, on entend que l'on retire des lamelles ou feuilles de l'empilement formant les nanoparticules lamellaires de manière à obtenir des particules lamellaires formées d'une ou de quelques feuilles (2, 3, 4 ou 5 par exemple). L'exfoliation par ultra-sons (sonication) peut produire de grandes quantités.

Les particules tubulaires en h-BN peuvent, par exemple, être produites en grande quantité par pyrolyse par aérosol (spray pyrolysis)

Selon un premier mode de réalisation, le film diélectrique comprend une alternance de strates de nanoparticules hydrides 20 et de strates de nanoparticules électriquement isolantes 60 (figure 4).

Selon un deuxième mode de réalisation, représenté sur la figure 5, les nanoparticules hydrides et les nanoparticules électriquement isolantes sont dispersées de manière aléatoire dans la matrice polymérique.

Selon un autre mode de réalisation, les nanoparticules électriquement isolantes 60 sont disposées dans et/ou sur la coquille des nanoparticules hydrides 20.

Ce dernier mode de réalisation peut être combiné avec le premier ou le deuxième mode de réalisation. En particulier, il est possible d'avoir des nanoparticules électriquement isolantes 60 dispersées de manière aléatoire dans la matrice polymérique 50 et dans la coquille des nanoparticules hybrides 20.

Un tel film diélectrique nanocomposite 40 présente une grande résistivité (par exemple $10^{12}$ - $10^{15}$ $\mu$Ohm.cm), une constante diélectrique qui peut être exceptionnellement élevée (par exemple 100 ou 1000) à l'approche du seuil de percolation électrique (par exemple 0.5, 1, ou 2 % en poids) et une haute tenue au claquage électrique (par exemple 10 MV/m, 100 MV/m, 500 MV/m).

Les nanoparticules hybrides 20 sont isolées électriquement, présentent une faible distribution de taille et sont dispersées de manière homogène dans le film diélectrique. Avec de telles nanoparticules 20, il est possible de miniaturiser des capacités destinées à des applications à haute tension.

Une telle capacité peut servir pour l'intégration des modules de conversion de puissance, par exemple pour les véhicules électriques.

Le film diélectrique 40 peut être fabriqué, par exemple, avec un procédé comportant les étapes suivantes :

    i. Fourniture d'une solution contenant :

- un solvant,
- les nanoparticules 20 à structure coeur/coquille, le coeur 21 des nanoparticules étant métallique et la coquille comprenant une première couche 22 en un matériau carboné et une deuxième couche 23 en un premier matériau polymère, les nanoparticules 20 présentant une faible polydispersité,
- le deuxième matériau polymère dissous ou les précurseurs du deuxième matériau polymère,
- les nanoparticules électriquement isolantes,

    ii. dépôt de la solution sur une électrode,
    iii. éventuellement, polymérisation des précurseurs du deuxième matériau polymère.

Par précurseur du polymère, on entend des monomères et/ou des oligomères et/ou des pré-polymères menant à la formation du polymère. Le précurseur du polymère est associé à un initiateur de polymérisation. L'initiateur de polymérisation est, par exemple, un photoinitiateur ou un amorceur radicalaire. Après la mise en forme, le précurseur est polymérisé de manière à obtenir le polymère.

Le solvant est un solvant organique. Le solvant est évaporé après le dépôt de la solution. La solution peut être déposée par une technique de dépôt sans contact. Il peut s'agir, par exemple, d'une technique d'enduction, telle que l'enduction en rideau (« curtain coating » ou « flow-coating ») ou par trempage-retrait (« dip-coating ») ou encore l'enduction centrifuge (« spin-coating ») De préférence, il s'agit d'enduction centrifuge.

Le film peut être exposé à une source lumineuse, de préférence à une source ultra-violette (UV). Le film peut être pressé à chaud, de préférence au voisinage de la température de transition vitreuse.

La solution de l'étape i) peut également contenir les nanoparticules électriquement isolantes 60 telles que décrites précédemment.

Alternativement, il est possible de déposer successivement la solution contenant les nanoparticules hybrides 20 puis une deuxième solution contenant les nanoparticules électriquement isolantes 60. Cette deuxième solution peut également contenir un troisième matériau polymère ou les précurseurs du troisième matériau polymère. Le troisième matériau polymère est, de préférence, identique au deuxième matériau polymère. Les deux solutions peuvent être déposées alternativement jusqu'à obtenir le nombre de strates désiré.

Le procédé peut être réalisé à température ambiante (20-25°C).

Le procédé est réalisé à pression ambiante (1bar).

Le procédé est, avantageusement, réalisé sous air, il n'y a pas besoin de travailler sous atmosphère contrôlée.

Alternativement, le film diélectrique 40 peut être obtenu par un dépôt plasma. On choisira, avantageusement, une technique de dépôt dont la température de mise en oeuvre est inférieure à la température de fusion du matériau polymère de la coquille.

Les nanoparticules 20 à structure coeur/coquille fournies à l'étape i) sont, avantageusement, obtenues selon les étapes suivantes :

Préparation d'une mini-émulsion eau-dans-huile comprenant des gouttelettes d'une phase aqueuse, dispersées dans une phase organique,

> a) Ajout de nanoparticules 20 comprenant un coeur métallique 21 recouvert par une coquille de matériau carboné 22, moyennant quoi on obtient des nanoparticules 20 piégées dans les gouttelettes,
> b) Ajout de monomères précurseurs du premier matériau polymère, et
> c) Ajout d'un initiateur de polymérisation,

La mise en présence des monomères et de l'initiateur de polymérisation conduisant à la polymérisation des monomères, moyennant quoi on obtient des nanoparticules 20, enrobées par une couche du premier matériau polymère 23, dispersées dans la phase organique.

L'émulsion va permettre de trier ces nanoparticules 20 en fonction de leur taille. Par exemple, pour une poudre dont le diamètre moyen des nanoparticules 20 est de l'ordre de 30 nm, la dispersion en taille est grande et peut aller de moins de 5 nm à plus de 300 nm. Cela est préjudiciable pour la fabrication d'un matériau nanocomposite à propriétés contrôlées. L'émulsion joue le rôle de filtre. On sélectionne les nanoparticules d'une certaine taille en choisissant de manière appropriée la taille des micelles.

De préférence, la taille des micelles est 2 à 3 fois supérieure à la taille moyenne des nanoparticules 20 (par exemple entre 60 et 90 nm pour 30 nm). Seules les nanoparticules 20 de taille moyenne de l'ordre de 30 nm seront piégées dans l'émulsion et seules ces nanoparticules 20 seront ultérieurement enrobées d'une couche de polymère 23. De cette manière, les nanoparticules 20 les plus grosses (par exemple 100 nm ou 300 nm) formeront un sédiment non recouvert de polymère qui sera facilement éliminé par la suite. Les nanoparticules 20 les petites (par exemple de 10 nm et moins) imparfaitement recouvertes de revêtement carboné 22 s'oxydent rapidement, et donc plus hydrophobe, restent dans la phase organique. Les nanoparticules en suspension dans la phase organique ou dans le sédiment, et ne participent pas à la polymérisation.

De manière avantageuse, une micelle contient une seule nanoparticule 20.

On choisira la taille des gouttelettes en fonction de la taille des nanoparticules 20 et de l'épaisseur de la couche de polymère 23 désirée.

Lors de l'étape a), on met en présence une phase aqueuse et une phase organique de manière à obtenir un mélange bi-phasique, puis on réalise une émulsification du mélange bi-phasique en présence d'un tensio-actif (ou émulsifiant), moyennant quoi on forme une émulsion eau-dans-huile, formée de gouttelettes de la phase aqueuse dispersée dans la phase organique. Les gouttelettes forment des micelles (coeur hydrophile - queues hydrophobes)

L'émulsification est, par exemple, formée par agitation (ultrasons). Le mélange reste stable grâce à l'ajout de l'émulsifiant. La vitesse ou la cinétique d'évolution du mélange est quasi nulle, ce qui en fait un milieu réactionnel confiné particulièrement stable et propice à la synthèse de polymères par polymérisation de monomères.

L'émulsion peut contenir d'autres ingrédients, non réactifs, mais nécessaires à la stabilisation de l'émulsion.

Avantageusement, les nanoparticules électriquement isolantes sont ajoutées à l'émulsion à l'étape a). Les particules sont, avantageusement, hydrophobes de manière à être dispersées dans la phase organique avec les monomères. Lors de la polymérisation, une partie de ces nanoparticules électriquement isolantes sont entraînées par les monomères et se retrouvent piégées dans et/ou sur la couche de polymère enrobant la nanoparticule métallique.

On ajoute dans l'émulsion, formée à l'étape b), l'initiateur de polymérisation et les monomères, précurseurs du polymère. Avantageusement, on choisit des quantités d'initiateur et de monomère de manière à obtenir un rendement de polymérisation faible afin de créer une couche 23 très fine de polymère à la surface des nanoparticules 20 (par exemple de 5nm à 10 nm). Par faible, on entend un rendement de polymérisation inférieur à 50%, et de préférence inférieur à 25%, préférentiellement inférieur à 20%, par exemple de l'ordre de 10 %. La quantité de monomères consommée est fixée par le rendement de polymérisation.

Selon une première variante de réalisation, les étapes c) et d) sont réalisées simultanément.

Selon une autre variante de réalisation, le procédé comporte successivement les étapes c), d) et c).

Selon un autre mode de réalisation, l'étape c) est réalisée préalablement à l'étape b).

Lorsque les précurseurs du polymère sont mis en présence de l'initiateur de polymérisation (aussi appelé amorceur de polymérisation), on initie la polymérisation.

La polymérisation est une polymérisation radicalaire. Celle-ci est amorcée par l'entrée dans la micelle d'un oligo-radical (hydrophile) préalablement formé en phase aqueuse qui va engendrer une consommation progressive des monomères (hydrophobes) stockés dans la phase dispersante (ici l'huile), jusqu'à saturation de la micelle.

On se place dans des conditions aptes à faire réagir l'amorceur de polymérisation, typiquement par élévation de la température et/ou par sonication.

Par exemple, la polymérisation est effectuée par chauffage de l'émulsion à une température comprise de 40°C à 80°C, de préférence de 50°C à 80°C, et préférentiellement de 60°C à 70°C. Ces gammes de température peuvent être adaptées en fonction de la température à laquelle l'amorceur de polymérisation devient réactif.

L'étape de polymérisation dure généralement de quelques minutes à quelques dizaines de minutes, par exemple environ 20 minutes. Cette étape peut être effectuée sous ultrasons à l'aide d'une sonde de sonication.

A l'issue de l'étape de polymérisation, les gouttelettes de l'émulsion sont converties en éléments solides dispersés dans la phase organique. Par « dispersion », on entend une suspension stable d'éléments solides, de préférence individualisés et non agglomérés, dans une phase continue liquide. Les éléments ont une taille moyenne équivalente à la taille moyenne des gouttelettes de l'émulsion dont ils sont issus.

A l'issue de l'étape de polymérisation, on réalise, avantageusement, un « lavage » (séquence de précipitation/dilution) pour éliminer les produits de réaction non consommés et récupérer le latex.

Une étape de centrifugation est, avantageusement, réalisée pour séparer les nanoparticules métal/C/polymère des billes de polymère.

On obtient un matériau composite prêt à l'emploi (colloïde ou poudre).

Exemples illustratifs et non limitatifs d'un mode de réalisation

Des nanoparticules 20 Ni/graphène/PS ont été préparées par un procédé de mini-émulsion. On ajoute du polystyrène (PS) de forte masse moléculaire à une solution contenant ces nanoparticules.

Sur un substrat 100 en silicium, pouvant être aminci à l'épaisseur désirée pour répondre au cahier des charges d'une capacité extra plate ($\leq$ 100 $\mu$m), on forme une première électrode 101 en or, par évaporation sous vide.

On dépose ensuite par dépôt à la tournette (« spincoating ») la solution contenant les nanoparticules et le PS. L'épaisseur du film diélectrique 40 peut être ajustée entre 0,05 $\mu$m et 50 $\mu$m. Elle est, par exemple,

de 2 $\mu$m pour un dépôt à 1000 tour/min. On forme ensuite la seconde électrode 102 de manière à obtenir une capacité plane (2D).

La capacité présente une distribution statistiquement homogène de nanoparticules 20 de Ni/C/polymère triées en taille dans la matrice hôte 50 en Polystyrène.

Ces conditions satisfont l'augmentation de la permittivité du polymère hôte prévue par la théorie de percolation.

**Revendications**

1. Capacité métal-polymère comprenant un film diélectrique (40) disposé entre une première électrode (101) et une seconde électrode (102), **caractérisée en ce que** le film diélectrique (40) comprend :

   - des nanoparticules (20) à structure coeur-coquille, le coeur (21) des nanoparticules étant métallique et la coquille comprenant une première couche (22) en un matériau carboné inorganique et une deuxième couche (23) en un premier matériau polymère, le rapport entre le diamètre maximal des nanoparticules (20) et le diamètre minimal des nanoparticules (20) étant inférieur ou égal à 5, de préférence inférieur ou égal à 3,
   - une matrice (50) dans laquelle sont dispersées les nanoparticules (20) à structure coeur-coquille, la matrice (50) étant une matrice minérale ou une matrice en un deuxième matériau polymère,
   - des nanoparticules électriquement isolantes (60), le pourcentage volumique de nanoparticules (20) à structure coeur-coquille dans le film diélectrique (40) allant de 0,01% à 10%, de préférence de 0,01% à 5 %, et encore plus préférentiellement de 0,1% à 2%.

2. Capacité selon la revendication 1, **caractérisée en ce que** le matériau carboné inorganique est du carbone 2D organisé, de préférence du graphène.

3. Capacité selon l'une des revendications 1 et 2, **caractérisée en ce que** le coeur (21) des nanoparticules à structure coeur-coquille est en cobalt, en fer, en nickel, en cuivre, en argent ou en or.

4. Capacité selon l'une quelconque des revendications précédentes, **caractérisée en ce que** le premier matériau polymère est choisi parmi le polystyrène, le polyméthacrylate de méthyle, le polyuréthane, un polyacrylique, le polypropylène, un polyimide, le polyétherimide et un polymère ayant un groupe pyrène.

5. Capacité selon l'une quelconque des revendications précédentes, **caractérisée en ce que** les nanoparticules électriquement isolantes (60) sont en oxyde métallique, par exemple en oxyde de baryum et/ou de strontium, en carbure de silicium, en diamant ou en nitrure de bore hexagonal.

6. Capacité selon l'une quelconque des revendications précédentes, **caractérisée en ce que** les nanoparticules électriquement isolantes (60) sont dans la coquille des nanoparticules.

7. Capacité selon l'une quelconque des revendications précédentes, **caractérisée en ce que** les nanoparticules électriquement isolantes (60) sont dans la matrice polymérique.

8. Capacité selon la revendication 7, **caractérisée en ce que** le film diélectrique comprend une alternance de nanoparticules (20) à structure coeur/coquille et de nanoparticules électriquement isolantes (60).

9. Capacité selon la revendication 7, **caractérisée en ce que** les nanoparticules (20) à structure coeur/coquille et les nanoparticules électriquement isolantes (60) sont dispersées de manière aléatoire dans la matrice polymérique (50).

10. Capacité selon l'une quelconque des revendications précédentes, **caractérisée en ce que** le deuxième matériau polymère est choisi parmi le polystyrène, le polyéthylène téréphtalate, l'acétate de cellulose, le polycarbonate, le polypropylène, le polyéthylène, un polyamide, un polysiloxane, un polysulfone, un polyester éventuellement aromatique, un polyétheréthercétone, un polyétherimide et un époxydes.

11. Capacité selon l'une quelconque des revendications précédentes, **caractérisée en ce que** le deuxième matériau polymère comprend des groupements photosensibles aux rayons ultra-violets.

12. Capacité selon l'une quelconque des revendications précédentes, **caractérisé en ce que** le rapport entre le diamètre maximal des nanoparticules (20) à structure coeur-coquille et le diamètre minimal des nanoparticules (20) à structure coeur-coquille est inférieur à 1,5, de préférence inférieur à 1,3, encore plus préférentiellement inférieur à 1,2 et encore plus préférentiellement inférieur à 1,1.

13. Procédé pour fabriquer une capacité métal-polymère telle que définie dans l'une quelconque des revendications 1 à 12, comprenant les étapes suivantes :

i. Fourniture d'une solution contenant :

- un solvant,

- les nanoparticules (20) à structure coeur/coquille, le coeur (21) des nanoparticules (20) étant métallique et la coquille comprenant une première couche (22) en un matériau carboné et une deuxième couche (23) en un premier matériau polymère, le rapport entre le diamètre maximal des nanoparticules (20) et le diamètre minimal des nanoparticules (20) étant inférieur ou égal à 5, de préférence inférieur ou égal à 3,
- le deuxième matériau polymère dissous ou les précurseurs du deuxième matériau polymère,
- les nanoparticules électriquement isolantes (60),

ii. éventuellement, polymérisation des précurseurs du deuxième matériau polymère,
iii. dépôt de la solution sur une électrode (101).

14. Procédé selon la revendication précédente, **caractérisé en ce que** les nanoparticules (20) à structure coeur/coquille fournies à l'étape i) sont obtenues selon les étapes suivantes :

a) Préparation d'une émulsion eau-dans-huile comprenant des gouttelettes d'une phase aqueuse, dispersées dans une phase organique,
b) Ajout de nanoparticules (20) comprenant un coeur métallique (21) recouvert par une coquille de matériau carboné (22), moyennant quoi on obtient des nanoparticules (20) piégées dans les gouttelettes,
c) Ajout de monomères précurseurs du premier matériau polymère, et
d) Ajout d'un initiateur de polymérisation,
la mise en présence des monomères et de l'initiateur de polymérisation conduisant à la polymérisation des monomères, moyennant quoi on obtient des nanoparticules (20), enrobées par une couche du premier matériau polymère (23), dispersées dans la phase organique,
des nanoparticules électriquement isolantes (60) étant ajoutées lors de l'étape a), b) ou c).

**Patentansprüche**

1. Metall-Polymer-Kapazität, einen dielektrischen Film (40) umfassend, der zwischen einer ersten Elektrode (101) und einer zweiten Elektrode (102) angeordnet ist, **dadurch gekennzeichnet, dass** der dielektrische Film (40) umfasst:

- Nanopartikel (20) mit Kern-Schalen-Struktur, wobei der Kern (21) der Nanopartikel metallisch ist und die Schale eine erste Schicht (22) aus einem anorganischen Kohlenstoffmaterial und eine zweite Schicht (23) aus einem ersten Polymermaterial umfasst, wobei das Verhältnis zwischen dem maximalen Durchmesser der Nanopartikel (20) und dem minimalen Durchmesser der Nanopartikel (20) kleiner oder gleich 5 ist, vorzugsweise kleiner oder gleich 3,
- eine Matrix (50), in der die Nanopartikel (20) mit Kern-Schalen-Struktur dispergiert sind, wobei die Matrix (50) eine Mineral-Matrix ist oder eine Matrix aus einem zweiten Polymermaterial,
- elektrisch isolierende Nanopartikel (60),

wobei der Volumenanteil von Nanopartikeln (20) mit Kern-Schalen-Struktur im dielektrischen Film (40) von 0,01 % bis 10 % reicht, vorzugsweise von 0,01 % bis 5 % und noch bevorzugter von 0,1 % bis 2 %.

2. Kapazität nach Anspruch 1, **dadurch gekennzeichnet, dass** das anorganische Kohlenstoffmaterial organisierter 2D-Kohlenstoff ist, vorzugsweise Graphen.

3. Kapazität nach einem der Ansprüche 1 und 2, **dadurch gekennzeichnet, dass** der Kern (21) der Nanopartikel mit Kern-Schalen-Struktur aus Kobalt, Eisen, Nickel, Kupfer, Silber oder Gold besteht.

4. Kapazität nach einem der vorhergehenden Ansprüche, **dadurch gekennzeichnet, dass** das erste Polymermaterial ausgewählt ist aus Polystyrol, Polymethylmethacrylat, Polyurethan, einem Polyacryl, Polypropylen, einem Polyimid, Polyetherimid und einem Polymer, das eine Pyrengruppe aufweist.

5. Kapazität nach einem der vorhergehenden Ansprüche, **dadurch gekennzeichnet, dass** die elektrisch isolierenden Nanopartikel (60) aus Metalloxid bestehen, beispielsweise Barium- und/oder Strontiumoxid, Siliciumcarbid, Diamant oder hexagonalem Bornitrid.

6. Kapazität nach einem der vorhergehenden Ansprüche, **dadurch gekennzeichnet, dass** sich die elektrisch isolierenden Nanopartikel (60) in der Schale der Nanopartikel befinden.

7. Kapazität nach einem der vorhergehenden Ansprüche, **dadurch gekennzeichnet, dass** sich die elektrisch isolierenden Nanopartikel (60) in der Polymer-Matrix befinden.

8. Kapazität nach Anspruch 7, **dadurch gekennzeichnet, dass** der dielektrische Film einen Wechsel von Nanopartikeln (20) mit Kern-Schalen-Struktur und elektrisch isolierenden Nanopartikeln (60) umfasst.

9. Kapazität nach Anspruch 7, **dadurch gekennzeich-**

**net, dass** die Nanopartikeln (20) mit Kern-Schalen-Struktur und die elektrisch isolierenden Nanopartikel (60) willkürlich in der Polymer-Matrix (50) dispergiert sind.

10. Kapazität nach einem der vorhergehenden Ansprüche, **dadurch gekennzeichnet, dass** das zweite Polymermaterial ausgewählt ist aus Polystyrol, Polyethylenterephthalat, Celluloseacetat, Polycarbonat, Polypropylen, Polyethylen, einem Polyamid, einem Polysiloxan, einem Polysulfon, einem gegebenenfalls aromatischen Polyester, einem Polyetheretherketon, einem Polyetherimid und Epoxiden.

11. Kapazität nach einem der vorhergehenden Ansprüche, **dadurch gekennzeichnet, dass** das zweite Polymermaterial gegen ultraviolette Strahlen lichtempfindliche Gruppierungen umfasst.

12. Kapazität nach einem der vorhergehenden Ansprüche, **dadurch gekennzeichnet, dass** das Verhältnis zwischen dem maximalen Durchmesser der Nanopartikel (20) mit Kern-Schalen-Struktur und dem minimalen Durchmesser der Nanopartikel (20) mit Kern-Schalen-Struktur kleiner als 1,5 ist, vorzugsweise kleiner als 1,3, noch bevorzugter kleiner als 1,2 und noch bevorzugter kleiner als 1,1.

13. Verfahren zur Herstellung einer Metall-Polymer-Kapazität nach einem der Ansprüche 1 bis 12, die folgenden Schritte umfassend:

    i. Bereitstellung einer Lösung, enthaltend:

        - ein Lösungsmittel,
        - die Nanopartikel (20) mit Kern-Schalen-Struktur, wobei der Kern (21) der Nanopartikel (20) metallisch ist und die Schale eine erste Schicht (22) aus einem Kohlenstoffmaterial und eine zweite Schicht (23) aus einem ersten Polymermaterial umfasst, wobei das Verhältnis zwischen dem maximalen Durchmesser der Nanopartikel (20) und dem minimalen Durchmesser der Nanopartikel (20) kleiner oder gleich 5 ist, vorzugsweise kleiner oder gleich 3,
        - das zweite gelöste Polymermaterial oder die Vorgänger des zweiten Polymermaterials,
        - die elektrisch isolierenden Nanopartikel (60),

    ii. gegebenenfalls, Polymerisation der Vorgänger des zweiten Polymermaterials,
    iii. Abscheidung der Lösung auf einer Elektrode (101).

14. Verfahren nach dem vorhergehenden Anspruch, **da-**

**durch gekennzeichnet, dass** die in Schritt i) bereitgestellten Nanopartikel (20) mit Kern-Schalen-Struktur gemäß den folgenden Schritten erhalten werden:

a) Ansetzen einer Wasser-in-Öl-Emulsion, Tröpfchen einer wässrigen Phase umfassend, die in einer organischen Phase dispergiert sind,
b) Zugabe von Nanopartikeln (20), die einen metallischen Kern (21) umfassen, der von einer Schale aus Kohlenstoffmaterial (22) bedeckt ist, wodurch Nanopartikel (20) erhalten werden, die in den Tröpfchen eingeschlossen sind,
c) Zugabe von Monomeren, die die Vorgänger des ersten Polymermaterials sind, und
d) Zugabe eines Polymerisationsinitiators, wobei das Inkontaktbringen der Monomere und des Polymerisationsinitiators zur Polymerisation der Monomere führt, wodurch Nanopartikel (20) erhalten werden, die mit einer Schicht des ersten Polymermaterials (23) umhüllt sind, und in der organischen Phase dispergiert sind, wobei elektrisch isolierende Nanopartikel (60) in den Schritten a), b) oder c) zugegeben werden.

## Claims

1. Metal-polymer capacitor comprising a dielectric film (40) disposed between a first electrode (101) and a second electrode (102), **characterised in that** the dielectric film (40) comprises:

   - core-shell structure nanoparticles (20), the core (21) of the nanoparticles being metallic and the shell comprising a first layer (22) made of an inorganic carbonaceous material and a second layer (23) made of a first polymer material, the ratio between the maximum diameter of the nanoparticles (20) and the minimum diameter of the nanoparticles (20) being less than or equal to 5, preferably less than or equal to 3,
   - a matrix (50) wherein the core-shell structure nanoparticles (20) are dispersed, the matrix (50) being a mineral matrix or a matrix made of a second polymer material,
   - electrically insulating nanoparticles (60);

   The volume percentage of core-shell structure nanoparticles (20) in the dielectric film (40) ranging from 0.01% to 10%, preferably from 0,01% to 5%, and even more preferentially from 0.1% to 2%.

2. Capacitor according to claim 1, **characterised in that** the inorganic carbonaceous material is organised 2D carbon, preferably graphene.

3. Capacitor according to claim 1, **characterised in that** the core (21) of the core-shell structure nanoparticles is made of cobalt, iron, nickel, copper, silver or gold.

4. Capacitor according to any one of the preceding claims, **characterised in that** the first polymer material is chosen among polystyrene, poly(methyl methacrylate), polyurethane, a polyacrylic, polypropylene, a polyimide, polyetherimide and a polymer having a pyrene group.

5. Capacitor according to any one of the preceding claims, **characterised in that** the electrically insulating nanoparticles (60) are made of metal oxide, for example of barium and/or strontium oxide, silicon carbide, diamond or hexagonal boron nitride.

6. Capacitor according to any one of the preceding claims, **characterised in that** the electrically insulating nanoparticles (60) are in the shell of the nanoparticles.

7. Capacitor according to any one of the preceding claims, **characterised in that** the electrically insulating nanoparticles (60) are in the polymeric matrix.

8. Capacitor according to claim 7, **characterised in that** the dielectric film comprises an alternation of core/shell structure nanoparticles (20) and electrically insulating nanoparticles (60).

9. Capacitor according to claim 7, **characterised in that** the core/shell structure nanoparticles (20) and the electrically insulating nanoparticles (60) are dispersed randomly in the polymeric matrix (50).

10. Capacitor according to any one of the preceding claims, **characterised in that** the second polymer material is chosen among polystyrene, polyethylene terephthalate, cellulose acetate, polycarbonate, polypropylene, polyethylene, a polyamide, a polysiloxane, a polysulphone, an optionally aromatic polyester, a polyetheretherketone, a polyetherimide and an epoxide.

11. Capacitor according to any one of the preceding claims, **characterised in that** the second polymer material comprises groups photosensitive to ultraviolet rays.

12. Capacitor according to any one of the preceding claims, **characterised in that** the ratio between the maximum diameter of the core-shell structure nanoparticles (20) and the minimum diameter of the core-shell structure nanoparticles (20 is less than 1.5, preferably less than 1.3, even more preferentially less than 1.2 and even more preferentially less than 1.1.

13. Method for manufacturing a metal-polymer capacitor as defined in any one of claims 1 to 12, comprising the following steps:

    i. Providing a solution containing:

        - a solvent,
        - the core-shell structure nanoparticles (20), the core (21) of the nanoparticles (20) being metallic and the shell comprising a first layer (22) made of a carbonaceous material and a second layer (23) made of a first polymer material, the ratio between the maximum diameter of the nanoparticles (20) and the minimum diameter of the nanoparticles (20) being less than or equal to 5, preferably less than 3,
        - the dissolved second polymer material or the precursors of the second polymer material,
        - the electrically insulating nanoparticles (60);

    ii. optionally, polymerising the precursors of the second polymer material,
    iii. depositing the solution on an electrode (101).

14. Method according to the preceding claim, **characterised in that** the core/shell structure nanoparticles (20) provided in step i) are obtained according to the following steps:

    a) Preparing a water-in-oil emulsion comprising droplets of an aqueous phase, dispersed in an organic phase,
    b) Adding nanoparticles (20) comprising a metallic core (21) coated with a shell of carbonaceous material (22), whereby nanoparticles (20) trapped in the droplets are obtained,
    c) Adding precursor monomers of the first polymer material, and
    d) Adding a polymerisation initiator,
    Contacting the monomers and the polymerisation initiator resulting in polymerisation of the monomers, whereby nanoparticles (20), coated with a layer of the first polymer material (23), dispersed in the organic phase, are obtained, electrically insulating nanoparticles (60) being added during step a), b) or c).

FIG.1 (art antérieur)

FIG.2 (art antérieur)

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CHU et al.** A dielectric polymer with high electric energy density and fast discharge speed. *Science,* vol. 313 (5785), 334-336
- **SHEN et al.** High dielectric performance of polymer composite films induced by a percolating interparticle barrier loyer. *Advanced Materials,* 2007, vol. 19 (10), 1418-1422
- **SHEN et al.** *Advanced Functional Materials,* vol. 17 (14), 2405-2410
- **WU et al.** Graphene/Boron Nitride-Polyurethane Microlaminates for Exceptional Dielectric Properties and High Energy Densities. *ACS applied materials & interfaces,* 2018, vol. 10 (31), 26641-26652